# FASCICULE DE BREVET EUROPEEN

(11) **EP 4 514 655 B1**
(45) Date de publication et mention de la délivrance du brevet: **29.04.2026**
(21) Numéro de dépôt: 23716645.9
(22) Date de dépôt: 20.03.2023
(51) Int. Cl.: B60R 1/00, B60J 5/10, B60R 11/04, B60R 1/26

(54) **PROCÉDÉ ET DISPOSITIF DE CONTRÔLE D'UN SYSTÈME DE RÉTROVISION NUMÉRIQUE D'UN VÉHICULE COMPRENANT UNE PORTE ARRIÈRE À DEUX BATTANTS**
VERFAHREN UND VORRICHTUNG ZUR STEUERUNG EINES DIGITALEN RÜCKBLICKSYSTEMS EINES FAHRZEUGS MIT EINER ZWEIFLÜGELIGEN HECKKLAPPE
METHOD AND DEVICE FOR CONTROLLING A DIGITAL REAR-VIEW SYSTEM OF A VEHICLE COMPRISING A DOUBLE-LEAF REAR DOOR

(30) Priorité: 25.04.2022 FR 2203830
(43) Date de publication de la demande: 05.03.2025
(73) Titulaire: Stellantis Auto SAS, 78300 Poissy (FR)
(72) Inventeur: CLAUDE, Emmanuel, 25200 MONTBELIARD (FR); MALTI, Ikram, 78220 VIROFLAY (FR); JEUNE, Eric, 25250 SOURANS (FR); D ANGELO, Laurent, 68720 SPECHBACH (FR)
(74) Mandataire: ESIP
(86) Numéro de dépôt international: PCT/FR2023/050392
(87) Numéro de publication internationale: WO 2023/209304

(56) Documents cités:
- EP-A2- 2 743 133
- DE-A1- 19 816 054

## Description

### Domaine technique

La présente invention concerne les procédés et dispositifs de contrôle d'un système de rétrovision numérique d'un véhicule comprenant une porte arrière à deux battants. La présente invention concerne également un procédé et un dispositif de contrôle de l'affichage d'image d'une vue de l'environnement extérieur arrière d'un véhicule dont la porte arrière comprend deux battants.

Le document EP2743133A2 divulgue un procédé de contrôle d'un système de rétro vision numérique selon l'état de la technique.

### Arrière-plan technologique

Certains véhicules, par exemple des véhicules utilitaires, sont équipés d'une porte arrière à deux battants avec une caméra arrière arrangée sur l'un des deux battants pour proposer une vue de l'arrière du véhicule au conducteur.

Une telle caméra est particulièrement utile lorsque la porte arrière du véhicule est pleine, sans fenêtre, ou lorsque le véhicule est équipé d'une cloison pleine séparant l'habitacle du coffre, ce qui empêche le conducteur d'avoir une vue de l'arrière du véhicule via un rétroviseur central intérieur.

Un dispositif d'affichage est alors monté dans l'habitacle du véhicule, par exemple en lieu et place du rétroviseur central intérieur, les images obtenues de la caméra arrière étant affiché sur ce dispositif d'affichage, offrant au conducteur une vue sur l'environnement extérieur à l'arrière du véhicule. Un tel affichage d'images de l'environnement extérieur arrière du véhicule est aussi appelé rétrovision numérique.

Sur les systèmes de rétrovision numérique actuels, la fonction permettant d'obtenir l'affichage de la vue arrière, c'est-à-dire la vue de l'environnement extérieur à l'arrière du véhicule, est désactivée lorsque l'un ou l'autre des deux battants formant la porte arrière est ouverte. Cette fonction est désactivée automatiquement lorsque le véhicule détecte l'ouverture des battants de la porte arrière via le capteur de détection de fermeture de porte arrangée dans la serrure de la porte arrière.

Il arrive cependant qu'un des battants soit ouvert volontairement par le conducteur, notamment le battant côté passager, pour transporter des objets ou marchandises dont la longueur dépasse celle du coffre. Ceci est rendu possible par un moyen mécanique permettant de maintenir fermé le battant côté conducteur qui correspond au battant comprenant la caméra arrière, la plaque d'immatriculation du véhicule et le 3^{ème} feu stop.

L'absence de la rétrovision numérique est alors particulièrement gênante pour manœuvrer le véhicule, voire dangereuse.

### Résumé de la présente invention

Un objet de la présente invention est de résoudre au moins l'un des problèmes de l'arrière-plan technologique décrit précédemment.

Un autre objet de la présente invention est d'améliorer le fonctionnement d'un système de rétrovision numérique d'un véhicule, plus particulièrement d'un véhicule à porte arrière à double battant.

Selon un premier aspect, la présente invention concerne un procédé de contrôle d'un système de rétrovision numérique d'un véhicule, le véhicule comprenant une porte arrière à deux battants, le système de rétrovision numérique comprenant au moins une caméra arrangée sur un premier battant des deux battants et un écran d'affichage arrangé dans un habitacle du véhicule, la au moins une caméra ayant dans son champ de vision un environnement extérieur arrière du véhicule, l'écran d'affichage étant configuré pour afficher au moins une vue arrière de l'environnement extérieur à partir de données reçues de la au moins une caméra, le procédé comprenant les étapes suivantes :
- réception d'une première information représentative d'ouverture d'au moins un battant des deux battants, la réception entrainant une désactivation d'une fonction du système de rétrovision numérique permettant l'affichage de la au moins une vue arrière sur l'écran d'affichage ;
- réception d'une deuxième information représentative d'une commande d'affichage de la au moins une vue arrière sur l'écran d'affichage, la deuxième information étant représentative d'un appui d'une durée supérieure à un seuil sur un premier organe de commande du système de rétrovision numérique ;
- activation de la fonction du système de rétrovision numérique permettant l'affichage de la au moins une vue arrière sur l'écran d'affichage, l'activation étant déclenchée par la réception de la deuxième information ;
- contrôle de l'affichage de la au moins une vue arrière sur l'écran d'affichage à partir des données reçues de la au moins une caméra.

L'utilisation d'une commande particulière basée sur un appui « long », c'est à dire supérieur à une durée déterminée, sur un organe de commande permet à un utilisateur du véhicule de réactiver la fonction de rétrovision numérique même si l'un et/ou l'autre des battants de la porte arrière est ouvert.

Ceci est particulièrement utile lorsque le battant côté passager est ouvert, la caméra arrière étant arrangée sur la battant côté conducteur. Ainsi, le conducteur peut visualiser l'environnement extérieur derrière le véhicule via le système de rétrovision numérique embarqué même si le battant de la porte arrière côté passager est ouvert, ce qui n'est pas possible dans les véhicules aujourd'hui sur le marché.

Selon une variante, la première information est reçue d'un capteur de détection de fermeture de la porte arrière, le capteur étant compris dans une serrure configurée pour assurer la fermeture des deux battants.

Selon une autre variante, le premier organe de commande correspond à un bouton arrangé sur l'écran d'affichage.

Selon une variante supplémentaire, le procédé comprend en outre une réception d'une troisième information représentative d'une commande d'affichage d'une vue extérieure différente de la au moins une vue arrière sur l'écran d'affichage, la troisième information étant représentative d'un appui sur un deuxième organe de commande du système de rétrovision numérique.

Selon encore une variante, le premier organe de commande est différent du deuxième organe de commande.

Selon un deuxième aspect, la présente invention concerne un dispositif de contrôle d'un système de rétrovision numérique d'un véhicule, le dispositif comprenant une mémoire associée à un processeur configuré pour la mise en œuvre des étapes du procédé selon le premier aspect de la présente invention.

Selon un troisième aspect, la présente invention concerne un système de rétrovision numérique d'un véhicule, le système comprenant le dispositif tel que décrit ci-dessus selon le deuxième aspect de la présente invention, une caméra arrangée sur un premier battant d'une porte arrière du véhicule, un écran d'affichage arrangé dans un habitacle du véhicule et un ensemble d'organes de commandes comprenant au moins un organe de commande.

Selon une variante, l'ensemble d'organes de commandes comprend un bouton de commande arrangé sur l'écran d'affichage.

Selon un quatrième aspect, la présente invention concerne un véhicule comprenant un dispositif tel que décrit ci-dessus selon le deuxième aspect de la présente invention ou un système de rétrovision numérique tel que décrit ci-dessus selon le troisième aspect de la présente invention.

Selon un cinquième aspect, la présente invention concerne un programme d'ordinateur qui comporte des instructions adaptées pour l'exécution des étapes du procédé selon le premier aspect de la présente invention, ceci notamment lorsque le programme d'ordinateur est exécuté par au moins un processeur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

Selon un sixième aspect, la présente invention concerne un support d'enregistrement lisible par un ordinateur sur lequel est enregistré un programme d'ordinateur comprenant des instructions pour l'exécution des étapes du procédé selon le premier aspect de la présente invention.

D'une part, le support d'enregistrement peut être n'importe quel entité ou dispositif capable de stocker le programme. Par exemple, le support peut comporter un moyen de stockage, tel qu'une mémoire ROM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon la présente invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

### Brève description des figures

D'autres caractéristiques et avantages de la présente invention ressortiront de la description des exemples de réalisation particuliers et non limitatifs de la présente invention ci-après, en référence aux figures 1 à 4 annexées, sur lesquelles :
[Fig. 1] illustre schématiquement une vue arrière d'un véhicule, selon un exemple de réalisation particulier et non limitatif de la présente invention ;
[Fig. 2] illustre schématiquement un système de rétrovision numérique du véhicule de la figure 1, selon un exemple de réalisation particulier et non limitatif de la présente invention ;
[Fig. 3] illustre schématiquement un dispositif configuré pour contrôler l'affichage d'une vue arrière du véhicule de la figure 1, selon un exemple de réalisation particulier et non limitatif de la présente invention ;
[Fig. 4] illustre un organigramme des différentes étapes d'un procédé de contrôle de l'affichage d'une vue arrière du véhicule de la figure 1, selon un exemple de réalisation particulier et non limitatif de la présente invention.

### Description des exemples de réalisation

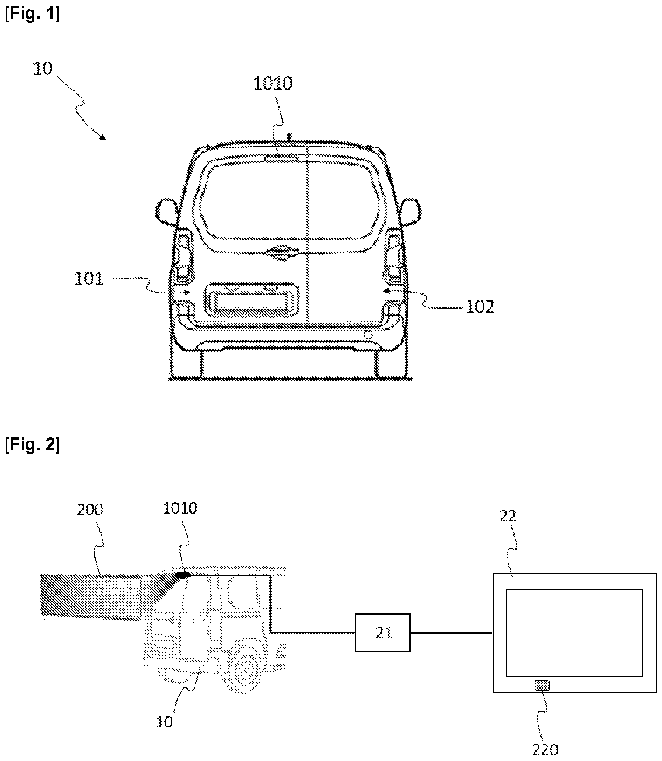

Un procédé et un dispositif de contrôle d'un système de rétrovision numérique d'un véhicule comprenant une porte arrière à deux battants vont maintenant être décrits dans ce qui va suivre en référence conjointement aux figures 1 à 4. Des mêmes éléments sont identifiés avec des mêmes signes de référence tout au long de la description qui va suivre.

Selon un exemple particulier et non limitatif de réalisation de la présente invention, un système de rétrovision numérique d'un véhicule comprend une (ou plusieurs) caméra arrière ayant dans son champ de vision l'environnement extérieur situé derrière le véhicule (c'est-à-dire à l'arrière du coffre) relié à un écran d'affichage arrangé dans l'habitacle du véhicule, par exemple à la place du rétroviseur intérieur ou sous ce dernier. Le système de rétrovision numérique est par exemple contrôlé par un ou plusieurs calculateurs. Le véhicule correspond à un véhicule dont la porte arrière comprend 2 battants latéraux, la caméra arrière étant arrangée sur un premier battant parmi les 2 battants, par exemple le battant côté conducteur. Un procédé de contrôle du système de rétrovision numérique comprend la réception d'une première information représentative de l'ouverture d'au moins un des battants de la porte arrière, cette première information étant par exemple reçu d'un capteur ou d'un contact électrique arrangée dans la serrure assurant la fermeture du premier battant avec le deuxième battant formant la porte arrière. La réception de cette première information entraine une désactivation d'une fonction du système de rétrovision numérique permettant l'affichage d'une vue arrière du véhicule (c'est-à-dire une vue de l'environnement extérieur arrière) sur l'écran d'affichage. Un appui d'une durée supérieure à un seuil sur un premier organe de commande du système de rétrovision numérique (correspondant à un appui dit long) déclenche la transmission d'une deuxième information représentative de cet appui long par l'organe de commande à destination du calculateur en charge de contrôler le système de rétrovision numérique. A réception de cette deuxième information, la fonction du système de rétrovision numérique permettant l'affichage de la vue arrière sur l'écran d'affichage est réactivée. L'affichage de la vue arrière sur l'écran d'affichage est alors contrôlé, par exemple par le calculateur en charge du système de rétrovision numérique, à partir des données reçues de la caméra arrière pour affichage d'images de l'environnement extérieur arrière du véhicule sur l'écran d'affichage.

Le champ de vision d'une caméra est aussi appelé champ visuel ou angle de vue. Un tel champ de vision est par exemple défini par la proportion entre la distance focale de l'objectif de la caméra et la taille du capteur d'images de la caméra.

La figure 1 illustre schématiquement un véhicule 10, selon une vue arrière, selon un exemple de réalisation particulier et non limitatif de la présente invention.

Le véhicule 10 correspond par exemple à un véhicule utilitaire, une camionnette, un van dont la porte arrière permettant d'accéder au coffre (aussi appelé zone de chargement) du véhicule 10 et de fermer le coffre est constituée de deux battants latéraux 101 et 102 coopérant l'un avec l'autre pour assurer la fermeture du coffre. Un premier battant 101 est par exemple arrangé côté conducteur (par exemple à gauche selon l'exemple de la figure 1) et un deuxième battant 102 est arrangé côté passager (par exemple à droite selon l'exemple de la figure 1).

Le premier battant 101 est fixé à rotation sur la caisse du véhicule 10, par exemple par l'intermédiaire de 2 (ou plus) charnières, permettant l'ouverture du premier battant 101 (rotation vers la gauche selon l'exemple de la figure 1 depuis une position de fermeture du premier battant 101) en position d'ouverture et la fermeture du premier battant 101 (rotation vers la droite selon l'exemple de la figure 1 depuis la position d'ouverture du premier battant 101).

De la même manière, le deuxième battant 102 est fixé à rotation sur la caisse du véhicule 10, par exemple par l'intermédiaire de 2 (ou plus) charnières, permettant l'ouverture du deuxième battant 102 (rotation vers la droite selon l'exemple de la figure 1 depuis une position de fermeture du deuxième battant 102) en position d'ouverture et la fermeture du deuxième battant 102 (rotation vers la gauche selon l'exemple de la figure 1 depuis la position d'ouverture du deuxième battant 102).

L'exemple de la figure 1 correspond à un véhicule dont le volant est à gauche. Bien entendu, l'invention s'étend également à un véhicule dont le volant est à droite, le battant côté conducteur correspondant alors au deuxième battant 102.

Le battant côté conducteur (le premier battant selon l'exemple de la figure 1) est aussi appelé porte maître ou battant maître alors que le battant côté passager est aussi appelé porte esclave ou battant esclave.

Le battant maître, c'est-à-dire le premier battant 101 selon l'exemple de la figure 1, correspond au battant supportant la plaque d'immatriculation arrière du véhicule 10 et le 3^{ème} feu stop du véhicule 10. Selon un exemple de réalisation particulier, le battant maître correspond au battant équipé d'un faisceau électrique pour alimenter l'éclairage de la plaque d'immatriculation, le 3^{ème} feu stop et tout dispositif électrique et/ou électronique monté sur ce battant maître.

La porte arrière est avantageusement équipée d'une serrure configurée pour assurer la fermeture du premier battant 101 et du deuxième battant 102 en position fermée. La serrure comprend une première partie arrangée dans le premier battant 101 et une deuxième partie arrangée dans le deuxième battant 102, la première partie coopérant avec la deuxième partie pour assurer la fermeture ou le verrouillage des deux battants 101, 102 entre eux en position de fermeture ou de verrouillage et pour permettre l'ouverture du premier battant 101 et/ou du deuxième battant 102 en position d'ouverture ou de déverrouillage.

Une telle serrure est bien connue de l'homme du métier et n'est pas décrite plus en détail dans la présente description.

La serrure comprend avantageusement un capteur de détection de fermeture de porte (aussi appelée capteur de détection d'ouverture de porte). Un tel capteur correspond par exemple à un contact électrique, le contact étant fermé lorsque la serrure est dans la position de fermeture ou de verrouillage. En position fermée, un courant électrique traverse le contact, ce qui génère la transmission d'un signal électrique à destination par exemple d'un calculateur configuré pour contrôler la porte arrière du véhicule 10 et/ou une ou plusieurs autres portes du véhicule 10.

En absence de la réception d'un tel signal électrique, le calculateur détecte ou détermine que la porte arrière est ouverte.

Le véhicule 10 est avantageusement configuré pour circuler avec le coffre ouvert, avec le premier battant 101 et/ou le deuxième battant 102 en position d'ouverture. A cet effet, le premier battant 101 est par exemple équipé de moyens de fermetures mécaniques (par exemple un verrou mécanique), par exemple disposés en pied de porte, qui viennent coopérer avec des moyens complémentaires arrangés dans le coffre du véhicule 10. Lorsque ces moyens de fermetures mécaniques correspondent à un verrou mécanique, le verrou vient s'insérer dans une ouverture pratiquée dans le plancher du coffre en regard de ce verrou pour maintenir le premier battant 101 en position de fermeture, le deuxième battant 102 étant alors en position d'ouverture. Selon cet exemple, le deuxième battant 102 étant en position d'ouverture, il n'est pas possible d'utiliser la serrure de la porte arrière pour maintenir le premier battant 101 en position de fermeture. Les moyens de fermeture mécanique remplacent dans cette situation la serrure pour maintenir le premier battant 101 fermé alors que le véhicule 10 circule.

La ou les charnières de chaque battant 101, 102 sont configurées pour maintenir l'un et/ou l'autre des battants 101, 102 en position de fermeture, par exemple pendant que le véhicule 10 circule.

Selon un mode de réalisation illustratif, le véhicule 10 circule avec le premier battant 101 (côté conducteur) maintenu en position de fermeture via les moyens de fermeture mécaniques et avec le deuxième battant 102 (côté passager) maintenu en position d'ouverture, par exemple pour transporter des objets longs ou encombrants. Cela est rendu possible puisque la plaque d'immatriculation arrière et le 3^{ème} feu stop sont arrangés sur le premier battant 101 qui est maintenu en position fermée.

Le véhicule 10 embarque également une ou plusieurs caméras arrière, par exemple une caméra arrière 1010 arrangée au niveau du 3^{ème} feu stop et/ou une caméra arrière arrangée au niveau de l'emplacement de la plaque d'immatriculation.

La caméra arrière 1010 est configurée pour acquérir des données d'images de l'environnement dans son champ de vision pour transmettre les données acquises, par exemple au calculateur en charge de contrôler le système de rétrovision numérique. Les données d'images acquises et reçues par le calculateur sont par exemple traitées ou enrichies pour être affichées sur l'écran d'affichage. Selon une variante, les données brutes des images acquises sont affichées sans traitement sur l'écran d'affichage, fournissant une ou plusieurs vues arrière de l'environnement extérieur derrière le coffre au conducteur et/ou aux passagers du véhicule 10.

La figure 2 illustre schématiquement un système de rétrovision numérique, au moins en partie, du véhicule 10, selon un exemple de réalisation particulier et non limitatif de la présente invention.

Le système de rétrovision numérique comprend une ou plusieurs caméras arrière 1010 reliés en communication à un ou plusieurs calculateurs 21 ainsi qu'un ou plusieurs écrans d'affichage 22 contrôlés par le ou les calculateurs 21.

Par exemple, une première caméra arrière 1010 est arrangée au niveau du 3^{ème} feu stop, une deuxième caméra arrière est arrangée au niveau de l'emplacement de la plaque d'immatriculation et/ou une troisième caméra est arrangée dans chaque rétroviseur extérieur, avec un champ de vision dirigé vers le sol et vers l'arrière.

Le ou les calculateurs 21, la ou les caméras et le ou les écrans 22 sont reliés entre eux et forment par exemple une architecture multiplexée pour la mise en œuvre de fonctions de rétrovision numérique. Le ou les calculateurs 21 communiquent par exemple avec d'autres calculateurs du véhicule (par exemple le calculateur contrôlant le verrouillage de la porte arrière) et échangent des données entre eux par l'intermédiaire d'un ou plusieurs bus informatiques, par exemple un bus de communication de type bus de données CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (selon la norme ISO 17458) ou Ethernet (selon la norme ISO/IEC 802-3).

Dans la suite de la description, il ne sera fait référence qu'à une seule caméra 1010, un seul calculateur 21 et un seul écran d'affichage 22 pour des raisons de clarté, sans cependant se limiter à un tel exemple particulier de réalisation.

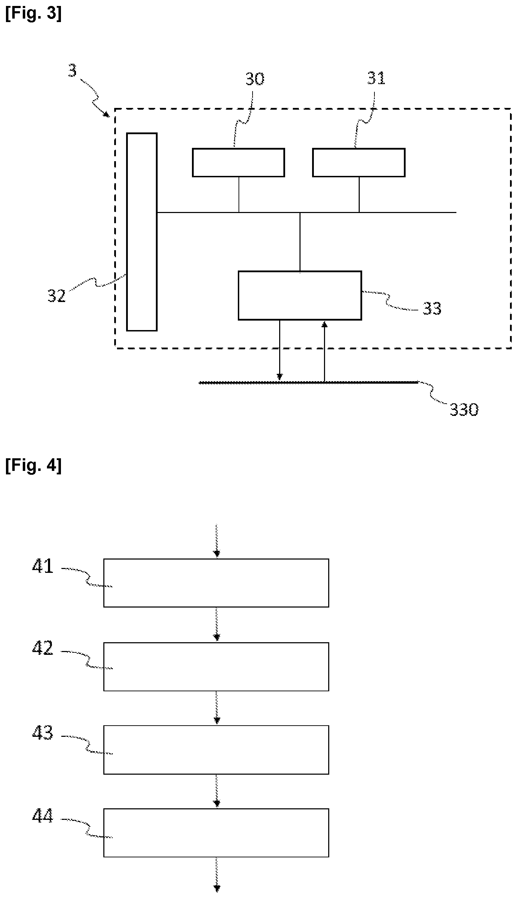

Un exemple matériel d'un tel calculateur 21 est décrit ci-dessous en regard de la figure 3.

La caméra arrière 1010 possède un champ de vision 200 déterminé. Selon une variante, plusieurs champs de vision différents offrant différentes vues arrière sont associés à la caméra arrière 1010 ou plusieurs champs de vision différents offrant différentes vues arrière sont obtenus via plusieurs caméras arrière.

L'écran d'affichage 22 correspond par exemple à un écran de type LCD (de l'anglais « Liquid Crystal Display » ou en français « Affichage à cristaux liquides »), par exemple de type de type TFT (de l'anglais « Thin-Film Transistor » ou en français « Transistor en film mince »), ou OLED (de l'anglais « Organic Light-Emitting Diode » ou en français « Diode électroluminescente organique »).

Une interface de commande appelée premier organe de commande du système de rétrovision numérique est associée à l'écran 22. Ce premier organe de commande correspond par exemple à un ou plusieurs boutons 220 physiques arrangés dans le cadre de l'écran. Selon une variante, ce ou ces boutons 220 correspondent à des boutons de commande graphiques ou virtuels affichés sur l'écran 22 avec lequel l'utilisateur interagit tactilement lorsque l'écran 22 est tactile.

Selon une variante, le premier organe de commande correspond à un bouton physique arrangé sur le tableau de bord, au niveau de l'habillage intérieur de la porte avant conducteur du véhicule 10 ou en tout emplacement accessible par le conducteur.

Selon une autre variante, le premier organe de commande correspond à un bouton ou une icône d'une IHM graphique affichée sur un écran central dans le tableau de bord par exemple.

L'utilisateur (par exemple le conducteur et/ou un passager) contrôle l'affichage des différentes vues arrière disponible en cliquant sur un deuxième organe de commande (non représenté sur la figure 2) du système de rétrovision numérique, chaque appui déclenchant une vue arrière différente selon un sens de défilement déterminé des vues arrière par exemple.

Le deuxième organe de commande correspond par exemple à un bouton d'un levier de commande disposé par exemple près du volant, un tel levier étant aussi appelé comodo.

Selon un autre exemple, le deuxième organe de commande comprend par exemple un bouton (physique ou virtuelle, un bouton virtuelle correspondant par exemple à une icône d'une interface homme machine (notée IHM) graphique affichée par exemple sur un écran tactile) spécifique à chaque vue arrière, l'utilisateur cliquant sur l'un ou sur l'autre des boutons pour afficher la vue arrière associée.

Un processus de contrôle du système de rétrovision numérique du véhicule 10 est mis en œuvre par un dispositif embarqué dans le véhicule 10 (par exemple un ou plusieurs processeurs d'un ou plusieurs calculateurs du système embarqué du véhicule 10).

Par exemple, le processus est mis en œuvre par un calculateur unique 21 en charge de l'ensemble du système de rétrovision numérique, un tel calculateur contrôlant l'écran 22 et la caméra 1010.

Dans une première opération de ce processus, une première information représentative d'ouverture d'au moins un battant des deux battants 101, 102 est reçue. Cette première information est par exemple reçue d'un calculateur contrôlant le système de verrouillage du véhicule, ou d'un calculateur de porte contrôlant uniquement le verrouillage de la porte arrière par l'intermédiaire d'un bus de données reliant ce calculateur au calculateur 21.

L'information représentative d'ouverture de porte est par exemple obtenue d'un capteur dit de détection de fermeture de porte intégrée dans la serrure de la porte arrière. La première information est déterminée par exemple lorsque le calculateur de porte ne reçoit pas le signal électrique du contact électrique de fermeture de porte transmis par le capteur lorsque la serrure est bien refermée. En l'absence de réception d'un tel signal électrique, le calculateur de porte détermine qu'au moins un des battants 101, 102 est ouvert.

La réception de cette première information par le calculateur 21 déclenche ou entraine la désactivation par le calculateur 21 d'une fonction du système de rétrovision numérique permettant l'affichage de la ou les vues arrière du véhicule obtenues des données reçues de la caméra arrière 1010.

Les données d'image acquises par la caméra 1010 sont par exemple toujours reçues par le calculateur 21 mais la visualisation de la ou les vues arrière associées à la caméra 1010 est bloquée, même si l'utilisateur requiert un tel affichage via le deuxième organe de commande.

Les données d'image sont reçues de la caméra 1010 par exemple par l'intermédiaire d'un ou plusieurs bus informatiques, par exemple un bus de communication de type bus de données CAN, CAN FD, FlexRay ou Ethernet reliant les différents dispositifs (calculateurs, caméras).

Dans une deuxième opération, une deuxième information représentative d'une commande d'affichage de la ou les vues arrière associées à la caméra 1010 est reçue.

Cette deuxième information est représentative d'un appui dit long sur le premier organe de commande, par exemple sur le bouton 220 présent sur l'écran 22. Un appui est dit long lorsque la durée de l'appui sur le bouton 220 est supérieure à un seuil déterminé, par exemple supérieur à 1 ou 2 s.

La valeur seuil correspond par exemple à un paramètre du système de rétrovision numérique stocké en mémoire du calculateur 21. La valeur d'un tel paramètre est par exemple modifiable par un utilisateur, par exemple via une IHM associée au système de rétrovision numérique.

Dans une troisième opération, la fonction du système de rétrovision numérique permettant l'affichage de la ou les vues arrière associées à la caméra arrière 1010 sur l'écran d'affichage 22 est réactivée suite à la réception de la deuxième information. L'activation de cette fonction est ainsi déclenchée par la réception de la deuxième information.

Dans une quatrième opération, l'affichage de la vue arrière associée à la caméra 1010 sur l'écran d'affichage est contrôlé par le calculateur 1010 à partir des données reçues de la caméra arrière 1010, après un éventuel traitement de ces données le cas échéant.

L'appui long sur le bouton 22 correspond à une commande volontaire de l'utilisateur qui souhaite voir l'environnement extérieur à l'arrière du véhicule 10. Un appui long est par exemple requis pour éviter que l'affichage de la vue arrière malgré l'ouverture d'un des battants (par exemple le deuxième battant 102 côté passager alors que le premier battant 101 est fermé) ne soit obtenue par inadvertance de l'utilisateur, par exemple après un appui involontaire sur un bouton du premier organe de commande ou du deuxième organe de commande.

Lorsque le premier battant 101 sur lequel est arrangée la caméra arrière 1010 est fermé (mécaniquement), l'ouverture du deuxième battant 102 ne gêne en rien la vue arrière obtenue de la caméra qui pointe bien vers l'arrière du véhicule 10 puisque le premier battant 101 est en position fermée.

Un appui long volontaire de l'utilisateur, par exemple du conducteur ayant décidé de laisser le deuxième battant 102 ouvert et ayant fermé mécaniquement le premier battant 101, permet de déclencher l'affichage de la vue arrière, même en absence de verrouillage de la porte arrière via la serrure prévue à cet effet et en absence de détection de fermeture de la porte via le capteur prévu à cet effet dans la serrure.

Lorsque plusieurs vues arrière sont disponibles via la caméra 1010 (ou via une autre caméra arrangée sur le premier battant 101), un autre appui long sur le bouton 22 déclenche l'affichage de cette autre vue arrière sur l'écran 22.

Selon un mode de réalisation particulier, une requête d'affichage d'une vue extérieure reçue du deuxième organe de commande (par exemple un appui classique sur un bouton de commande prévu à cet effet) et disponible malgré l'absence de détection de fermeture de la porte arrière déclenche l'affichage de cette vue à la place de la vue arrière de la caméra 1010. La fonction d'affichage de la vue arrière associée à la caméra arrière 1010 n'est alors de nouveau plus disponible (via le deuxième organe de commande) tant que la fermeture de la porte arrière n'a pas été détectée. Pour afficher la vue arrière associée à la caméra arrière 1010, l'utilisateur doit de nouveau effectuer un appui long sur le bouton 22.

De la même manière, une commande d'extinction du moteur du véhicule 10, alors que la vue arrière associée à la caméra arrière 1010 est affichée sur l'écran 22, entraine la désactivation de la fonction permettant l'affichage de cette vue arrière tant que la fermeture de la porte arrière n'a pas été détectée. Pour afficher la vue arrière associée à la caméra arrière 1010, l'utilisateur doit de nouveau effectuer un appui long sur le bouton 22.

La figure 3 illustre schématiquement un dispositif 3 configuré pour contrôler le système de rétrovision numérique d'un véhicule, par exemple le véhicule 10, selon un exemple de réalisation particulier et non limitatif de la présente invention. Le dispositif 3 correspond par exemple à un dispositif embarqué dans le véhicule 10, par exemple le calculateur 21.

Le dispositif 3 est par exemple configuré pour la mise en œuvre des opérations décrites en regard des figures 1 et 2 et/ou des étapes du procédé décrit en regard de la figure 4. Des exemples d'un tel dispositif 3 comprennent, sans y être limités, un équipement électronique embarqué tel qu'un ordinateur de bord d'un véhicule, un calculateur électronique tel qu'une UCE (« Unité de Commande Electronique »), un téléphone intelligent, une tablette, un ordinateur portable. Les éléments du dispositif 3, individuellement ou en combinaison, peuvent être intégrés dans un unique circuit intégré, dans plusieurs circuits intégrés, et/ou dans des composants discrets. Le dispositif 3 peut être réalisé sous la forme de circuits électroniques ou de modules logiciels (ou informatiques) ou encore d'une combinaison de circuits électroniques et de modules logiciels.

Le dispositif 3 comprend un (ou plusieurs) processeur(s) 30 configurés pour exécuter des instructions pour la réalisation des étapes du procédé et/ou pour l'exécution des instructions du ou des logiciels embarqués dans le dispositif 3. Le processeur 30 peut inclure de la mémoire intégrée, une interface d'entrée/sortie, et différents circuits connus de l'homme du métier. Le dispositif 3 comprend en outre au moins une mémoire 31 correspondant par exemple à une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la mémoire 31.

Selon différents exemples de réalisation particuliers et non limitatifs, le dispositif 3 est couplé en communication avec d'autres dispositifs ou systèmes similaires et/ou avec des dispositifs de communication, par exemple une TCU (de l'anglais « Telematic Control Unit » ou en français « Unité de Contrôle Télématique »), par exemple par l'intermédiaire d'un bus de communication ou au travers de ports d'entrée / sortie dédiés.

Selon un exemple de réalisation particulier et non limitatif, le dispositif 3 comprend un bloc 32 d'éléments d'interface pour communiquer avec des dispositifs externes. Les éléments d'interface du bloc 32 comprennent une ou plusieurs des interfaces suivantes :
- interface radiofréquence RF, par exemple de type Wi-Fi^{®} (selon IEEE 802.11), par exemple dans les bandes de fréquence à 2,4 ou 5 GHz, ou de type Bluetooth^{®} (selon IEEE 802.15.1), dans la bande de fréquence à 2,4 GHz, ou de type Sigfox utilisant une technologie radio UBN (de l'anglais Ultra Narrow Band, en français bande ultra étroite), ou LoRa dans la bande de fréquence 868 MHz, LTE (de l'anglais « Long-Term Evolution » ou en français « Evolution à long terme »), LTE-Advanced (ou en français LTE-avancé) ;
- interface USB (de l'anglais « Universal Serial Bus » ou « Bus Universel en Série » en français) ;
- interface HDMI (de l'anglais « High Definition Multimedia Interface », ou « Interface Multimedia Haute Definition » en français) ;
- interface LIN (de l'anglais « Local Interconnect Network », ou en français « Réseau interconnecté local »).

Selon un autre exemple de réalisation particulier et non limitatif, le dispositif 3 comprend une interface de communication 33 qui permet d'établir une communication avec d'autres dispositifs (tels que d'autres calculateurs du système embarqué) via un canal de communication 330. L'interface de communication 33 correspond par exemple à un transmetteur configuré pour transmettre et recevoir des informations et/ou des données via le canal de communication 330. L'interface de communication 33 correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (standardisé par la norme ISO 17458) ou Ethernet (standardisé par la norme ISO/IEC 802-3).

Selon un exemple de réalisation particulier et non limitatif, le dispositif 3 peut fournir des signaux de sortie à un ou plusieurs dispositifs externes, tels qu'un écran d'affichage (par exemple l'écran 22), tactile ou non, un ou des haut-parleurs et/ou d'autres périphériques (système de projection) via des interfaces de sortie respectives. Selon une variante, l'un ou l'autre des dispositifs externes est intégré au dispositif 3.

La figure 4 illustre un organigramme des différentes étapes d'un procédé de contrôle d'un système de rétrovision numérique d'un véhicule, par exemple le véhicule 10, selon un exemple de réalisation particulier et non limitatif de la présente invention. Le procédé est par exemple mis en œuvre par un dispositif embarqué dans le véhicule 10 ou par le dispositif 3 de la figure 3.

Dans une première étape 41, une première information représentative d'ouverture d'au moins un battant des deux battants est reçue, la réception entrainant une désactivation d'une fonction du système de rétrovision numérique permettant l'affichage de la au moins une vue arrière sur l'écran d'affichage.

Dans une deuxième étape 42, une deuxième information représentative d'une commande d'affichage de la au moins une vue arrière sur l'écran d'affichage est reçue, la deuxième information étant représentative d'un appui d'une durée supérieure à un seuil sur un premier organe de commande du système de rétrovision numérique.

Dans une troisième étape 43, la fonction du système de rétrovision numérique permettant l'affichage de la au moins une vue arrière sur l'écran d'affichage est activée, l'activation étant déclenchée par la réception de la deuxième information.

Dans une quatrième étape 44, l'affichage de la au moins une vue arrière sur l'écran d'affichage est contrôlé à partir des données reçues de la au moins une caméra.

Selon une variante, les variantes et exemples des opérations décrits en relation avec la figure 1 et/ou 2 s'appliquent aux étapes du procédé de la figure 4.

Bien entendu, la présente invention ne se limite pas aux exemples de réalisation décrits ci-avant mais s'étend à un procédé de contrôle d'affichage d'images obtenues d'une caméra qui inclurait des étapes secondaires sans pour cela sortir de la portée de la présente invention. Il en serait de même d'un dispositif configuré pour la mise en œuvre d'un tel procédé.

La présence invention concerne également un système de rétrovision numérique, par exemple le système décrit en regard de la figure 2.

La présente invention concerne également un véhicule, par exemple un véhicule à moteur terrestre, comprenant le dispositif 3 de la figure 3 ou le système de rétrovision numérique de la figure 2.

## Revendications

1. Procédé de contrôle d'un système de rétrovision numérique d'un véhicule (10), ledit véhicule (10) comprenant une porte arrière à deux battants (101, 102), ledit système de rétrovision numérique comprenant au moins une caméra (1010) arrangée sur un premier battant (101) desdits deux battants (101, 102) et un écran d'affichage (22) arrangé dans un habitacle dudit véhicule (10), ladite au moins une caméra (1010) ayant dans son champ de vision un environnement extérieur arrière dudit véhicule (10), ledit écran d'affichage (22) étant configuré pour afficher au moins une vue arrière dudit environnement extérieur à partir de données reçues de ladite au moins une caméra (1010), ledit procédé comprenant les étapes suivantes :
- réception (41) d'une première information représentative d'ouverture d'au moins un battant (102) desdits deux battants, ladite réception entrainant une désactivation d'une fonction dudit système de rétrovision numérique permettant l'affichage de ladite au moins une vue arrière sur ledit écran d'affichage (22) ;
- réception (42) d'une deuxième information représentative d'une commande d'affichage de ladite au moins une vue arrière sur ledit écran d'affichage (22), ladite deuxième information étant représentative d'un appui d'une durée supérieure à un seuil sur un premier organe de commande (220) dudit système de rétrovision numérique ;
- activation (43) de ladite fonction dudit système de rétrovision numérique permettant l'affichage de ladite au moins une vue arrière sur ledit écran d'affichage (22), ladite activation étant déclenchée par la réception de ladite deuxième information ;
- contrôle (44) de l'affichage de ladite au moins une vue arrière sur ledit écran d'affichage (22) à partir des données reçues de ladite au moins une caméra (1010).

2. Procédé selon la revendication 1, pour lequel ladite première information est reçue d'un capteur de détection de fermeture de ladite porte arrière, ledit capteur étant compris dans une serrure configurée pour assurer la fermeture desdits deux battants (101, 102).

3. Procédé selon la revendication 1 ou 2, pour lequel ledit premier organe de commande correspond à un bouton (220) arrangé sur ledit écran d'affichage (22).

4. Procédé selon l'une des revendications 1 à 3, comprenant en outre une réception d'une troisième information représentative d'une commande d'affichage d'une vue extérieure différente de ladite au moins une vue arrière sur ledit écran d'affichage (22), ladite troisième information étant représentative d'un appui sur un deuxième organe de commande dudit système de rétrovision numérique.

5. Procédé selon la revendication 4, pour lequel ledit premier organe de commande est différent dudit deuxième organe de commande.

6. Programme d'ordinateur comportant des instructions pour la mise en œuvre du procédé selon l'une quelconque des revendications précédentes, lorsque ces instructions sont exécutées par un processeur.

7. Dispositif (3) de contrôle d'affichage d'une vue arrière pour véhicule, ledit dispositif (3) comprenant une mémoire (31) associée à au moins un processeur (30) configuré pour la mise en œuvre des étapes du procédé selon l'une quelconque des revendications 1 à 5.

8. Système de rétrovision numérique d'un véhicule (10), ledit système comprenant le dispositif (3) selon la revendication 7, une caméra (1010) arrangée sur un premier battant (101) d'une porte arrière dudit véhicule (10), un écran d'affichage (22) arrangé dans un habitacle dudit véhicule (10) et un ensemble d'organes de commandes comprenant au moins un organe de commande.

9. Système selon la revendication 8, pour lequel ledit ensemble d'organes de commandes comprend un bouton de commande (220) arrangé sur ledit écran d'affichage (22).

10. Véhicule (10) comprenant le dispositif (3) selon la revendication 7 ou le système d'affichage selon la revendication 8 ou 9.

## Patentansprüche

1. Verfahren zum Steuern eines digitalen Fahrzeugrückblicksystems (10), wobei das Fahrzeug (10) eine zweiflügelige Hintertür (101, 102) aufweist, wobei das digitale Rückblicksystem mindestens eine Kamera (1010), die an einem ersten Flügel (101) der beiden Flügel (101, 102) angeordnet ist, und einen Anzeigebildschirm (22), der in einem Fahrgastraum des Fahrzeugs (10) angeordnet ist, aufweist, wobei die mindestens eine Kamera (1010) in ihrem Sichtfeld eine hintere Umgebung aufweist Fahrzeug (10), wobei der Anzeigebildschirm (22) so konfiguriert ist, dass er mindestens eine Rückansicht der äußeren Umgebung aus Daten anzeigt, die von der mindestens einen Kamera (1010) empfangen werden, wobei das Verfahren die folgenden Schritte umfasst:
- Empfangen (41) einer ersten Information, die für das Öffnen mindestens eines Flügels (102) der beiden Flügel repräsentativ ist, wobei der Empfang die Deaktivierung einer Funktion des digitalen Rückblicksystems bewirkt, die die Anzeige der mindestens einen Rückansicht auf dem Anzeigebildschirm (22) ermöglicht;
- Empfangen (42) einer zweiten Information repräsentativ für eine Anzeigesteuerung der mindestens einen Rückansicht auf dem Anzeigeschirm (22), wobei die zweite Information repräsentativ ist für eine Unterstützung einer Dauer, die länger als ein Schwellenwert ist, auf einem ersten Steuerorgan (220) des digitalen Rückblicksystems;
- Aktivierung (43) der Funktion des digitalen Rückblicksystems, die die Anzeige der mindestens einen Rückansicht auf dem Anzeigeschirm (22) ermöglicht, wobei die Aktivierung durch Empfang der zweiten Information ausgelöst wird;
- Steuerung (44) der Anzeige der mindestens einen Rückansicht auf dem Anzeigeschirm von (22) aus von der mindestens einen Kamera (1010) empfangene Daten.

2. Verfahren nach Anspruch 1, bei dem die erste Information von einem Sensor zum Erfassen des Schließens der hinteren Tür empfangen wird, wobei der Sensor in einem Schloss enthalten ist, das zum Schließen der beiden Flügel (101, 102) konfiguriert ist.

3. Verfahren nach Anspruch 1 oder 2, wobei das erste Steuerelement einem Knopf (220) entspricht, der auf dem Anzeigebildschirm (22) angeordnet ist.

4. Verfahren nach einem der Ansprüche 1 bis 3, das des Weiteren das Empfangen einer dritten Information umfasst, die einen Anzeigesteuerbefehl für eine Außenansicht darstellt, die sich von der mindestens einen Rückansicht auf dem Anzeigebildschirm (22) unterscheidet, wobei die dritte Information eine Betätigung eines zweiten Steuerelements des digitalen Rückblicksystems darstellt.

5. Verfahren nach Anspruch 4, bei dem sich das erste Steuerelement von dem zweiten Steuerelement unterscheidet.

6. Computerprogramm mit Anweisungen zur Durchführung des Verfahrens nach einem der vorhergehenden Ansprüche, wenn diese Anweisungen von einem Prozessor ausgeführt werden.

7. Vorrichtung (3) zur Steuerung einer Rückansicht für ein Fahrzeug, wobei die Vorrichtung (3) einen Speicher (31) umfasst, der mit mindestens einem Prozessor (30) verbunden ist, der zur Durchführung der Schritte des Verfahrens nach einem der Ansprüche 1 bis 5 konfiguriert ist.

8. Digitales Fahrzeug-Rückblicksystem (10), wobei das System die Vorrichtung (3) nach Anspruch 7, eine Kamera (1010), die an einem ersten Flügel (101) einer Hintertür des Fahrzeugs (10) angeordnet ist, einen Anzeigebildschirm (22), der in einem Fahrgastraum des Fahrzeugs (10) angeordnet ist, und eine Steuerelementanordnung, die mindestens ein Steuerelement umfasst, umfasst.

9. System nach Anspruch 8, bei dem der Satz von Steuerelementen einen auf dem Anzeigebildschirm (22) angeordneten Bedienknopf (220) umfasst.

10. Fahrzeug (10) mit der Vorrichtung (3) nach Anspruch 7 oder dem Anzeigesystem nach Anspruch 8 oder 9.

## Claims

1. Method for controlling a numerical rear-view system of a vehicle (10), said rear (10) comprising a two-leaf gate (101, 102), said numerical rear-view system comprising at least one camera (1010) arranged on a first leaf (101) of said two leaves (101, 102) and a display screen (22) arranged in a passenger compartment of said vehicle (10), said at least one camera (1010) having in its field of vision a rear exterior environment of said vehicle (10), said display screen (22) being configured to display at least one rear view of said exterior environment from data received from said at least one camera (10100), said method comprising the receipt steps of:
- receipt (41) first information representative of opening of at least one leaf (102) of said two leaves, said receipt causing a deactivation of a function of said numerical retrovision system allowing the display of said at least one rear view on said display screen (22);
- receipt (42) of a second information representative of a purchase order display of said at least one rear view on said display screen (22), said second information being representative of a pressing of a duration greater than one threshold on a first control member (220) of said numerical retrovision system;
- activation (43) of said function of said numerical retrovision system allowing the display of said at least one rear view on said display screen (22), said activation being triggered by the receipt said second piece of information;
- checking (44) the display of said at least one rear view on said display screen (22) on the basis of the data received from said at least one camera (1010).

2. Method according to claim 1, wherein said first information is received from a sensor for detecting the closure of said rear gate, said sensor being included in a lock configured to ensure the closure of said two leaves (101, 102).

3. Method according to claim 1 or 2, for which said first control member corresponds to a button (220) arranged on said display screen (22).

4. Method according to one of claims 1 to 3, further comprising a receipt of a third piece of information representative of a display order of an outside view different from said at least one rear view on said display screen (22), said third piece of information being representative of a pressure on a second control member of said numerical retrovision system.

5. Method according to claim 4, wherein said first control member is different from said second control member.

6. Computer plan comprising instructions for the implementation of the method according to any one of the previous claims, when these instructions are executed by a processor.

7. Device (3) for controlling the display of a rear view for a vehicle, said device (3) comprising a memory (31) associated with at least one processor (30) configured for implementing the steps of the method according to any one of claims 1 to 5.

8. A system for digitally retroviewing a vehicle (10), said system comprising the device (3) according to claim 7, a camera (1010) arranged on a first leaf (101) of a rear gate of said vehicle (10), a display screen (22) arranged in a passenger compartment of said vehicle (10) and a set of control members comprising at least one control member.

9. The system according to claim 8, wherein said set of control members comprises a control button (220) arranged on said display screen (22).

10. Vehicle (10) comprising the device (3) according to claim 7 or the display system according to claim 8 or 9.
